**Europäisches Patentamt**

**(19)** **European Patent Office**

**Office européen des brevets**

(11) Publication number : **0 304 517 B1**

# (12) EUROPEAN PATENT SPECIFICATION

(45) Date of publication of patent specification :
**02.11.94 Bulletin 94/44**

(51) Int. Cl.⁵ : **G02B 5/00**

(21) Application number : **87307476.9**

(22) Date of filing : **24.08.87**

(54) Anti-glare filter.

(43) Date of publication of application :
**01.03.89 Bulletin 89/09**

(45) Publication of the grant of the patent :
**02.11.94 Bulletin 94/44**

(84) Designated Contracting States :
**AT BE CH DE ES FR GB GR IT LI LU NL SE**

(56) References cited :
**DE-A- 2 734 977**
**US-A- 2 746 030**
**US-A- 2 909 770**
**US-A- 4 165 920**

(73) Proprietor : **QANTIX CORPORATION**
**130 Main Street**
**Flemington New Jersey 08822 (US)**

(72) Inventor : **Brown, John Wilson**
**301 Philadelphia Boulevard**
**Sea Girt New Jersey 08570 (US)**

(74) Representative : **Beresford, Keith Denis Lewis**
**et al**
**BERESFORD & Co.**
**2-5 Warwick Court**
**High Holborn**
**London WC1R 5DJ (GB)**

## Description

The present invention relates to a viewing screen assembly, of the type comprising a viewing screen for displaying information and an optical filter positioned in the front of the viewing screen with air therebetween.

It has long been recognized that the front face of a transmission screen, such as the screen of a cathode ray tube, as used in a television or a computer terminal, produces glare caused by ambient light. As a result of this phenomena, a substantial amount of glare is encountered when viewing, for example, a cathode ray tube in a brightly lit room. The glare problem can be reduced by increasing the intensity of the radiation from the cathode ray tube. However, manufacturing tubes capable of producing the intensity necessary to overcome glare encountered in a brightly lit room greatly increases the cost of the tube. It is therefore desirable to produce a filter or overlay which reduces the glare produced by ambient light.

United States Patent No. 4,165,920, issued to the present applicant, discloses a front face glare reduction overlay, including an echo reduction improvement. The improvement involves applying a coating of opaque material to the peaks of a sawtooth, formed on the front surface of the overlay. This patent discloses an overlay in which the horizontal portion of the sawtooth should be inclined at approximately six degrees from the horizontal, and the vertical portion of the saw-tooth should be inclined approximately 30 degrees from the vertical. Using these angles, in conjunction with the opaque material, provides a front face glare reduction overlay which produces satisfactory results. However, despite the satisfactory results, it proved difficult to manufacture the peaks of the saw-tooth with a sharp point and because the peaks tended to have a round or lenticular shape, they were difficult to coat with the opaque material. Light from the transmission screen was refracted by the uncoated or partially coated peaks in a number of different vertical directions, thereby creating a further problem with echo images.

In an attempt to provide an overlay or filter for the viewing surface of a transmission screen, to reduce front face glare, which is both inexpensive and easy to manufacture, an anti-glare device was developed, which is described and illustrated in United States Patent No. 4,473,277. The anti-glare device of this patent could be applied directly to the surface of a CRT but, alternatively, it could also be positioned at a discrete distance therefrom. With the back surface thus free of the requirement of being fitted tightly to the transmission screen, it was discovered that the opaque material applied to the peaks of the saw-tooth could be eliminated if a circular polariser or some similar filter means was mounted to the back surface of the anti-glare device. The anti-glare device disclosed in US 4,473,277 proved to be easy to manufacture and free of echo image problems, however, the cost of the circular polariser together with the time and expense required by the bonding step, which bonded the circular polariser to the anti-glare device, made the device expensive to produce.

United States Patent No. 2,909,770 of Pugsley discloses a transmission screen on which are provided a multiplicity of grooves which serve to reduce glare from ambient light reflecting off the screen. In this disclosure, inclined surfaces of the V-shaped grooves reflect ambient light downwards and away from the viewing area of the observer. Perpendicular sides of the V-shape grooves are coated with a light absorbant substance, to avoid multiple reflections which might otherwise cause some of the ambient light, initially reflected downwards, from eventually coming back to the observer's eyes.

According to an aspect of the present invention, there is provided a viewing screen assembly of the aforesaid type, wherein said filter is a sheet of a substantially transparent material, with a first smooth face facing the viewing screen and an opposite second face on the side of the viewer; said second face has a plurality of V-shaped parallel grooves forming, as seen in cross-section, a saw-tooth shape body between each two adjacent grooves; said saw-tooth shape bodies are non-symetrical, with one of the surfaces of each of the saw-tooth shape bodies arranged in the range of plus or minus 10 degress ($\pm 10°$) from a perpendicular to said first face; and the other of the surfaces of each of said saw-tooth shaped bodies is inclined at an angle at or above the critical angle of said material, when measured from a notional line parallel to said first face; such that ambient light passing through said filer, reflected off said viewing screen and entering into the filter again, is internally reflected at said second face.

Preferably, the viewing screen is a transmission screen which may be a liquid crystal display.

In a preferred embodiment, the first and second faces are curved to follow the contours of the viewing screen.

The invention will now be described by way of example only, with reference to the accompanying drawings, in which:

Figure 1 is a side view of a portion of an anti-glare filter constructed according to the present invention and shown in combination with a portion of a transmission screen;

Figure 2 is a side view of a portion of an anti-glare filter, having roughened and blackened surfaces which improve the optical qualities of the filter; and

Figure 3 is a side view of a portion of an anti-glare filter together with illustrative light rays emanating from two light sources.

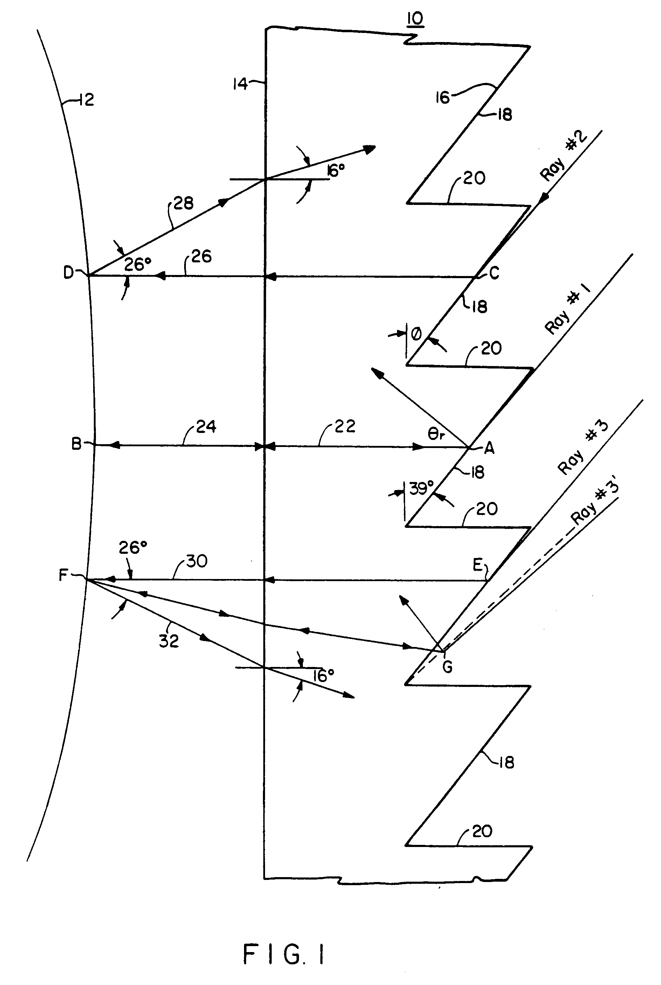

The present invention is directed to a viewing screen assembly with an anti-glare filter 10, a portion of which is shown in profile in Figure 1. When the anti-glare filter 10 is placed in front of a CRT or other back projection display, or in front of a liquid crystal display (LCD), it interrupts ambient light rays and light rays which have reflected from the face of the CRT and blocks their exit from the front face of the filter such that they are not seen by the operator.

Figure 1 illustrates the basic principle of the present invention. The anti-glare filter 10 is placed in front of the viewing screen of a CRT 12. The filter 10 is comprised of a sheet of material having a substantially planar first or back face 14 and a second or front face 16 having a plurality of V-shaped grooves. Each of the grooves is formed by two walls, a first wall 18 and a second wall 20. The first wall 18 is inclined at an angle $\phi$ of at least the critical angle for the material of the anti-glare filter 10 with respect to the first face 14. This inclination provides the anti-glare filter 10 with unique properties which are a result of the filter's geometry. The selection of the angle of inclination $\phi$ of the first wall 18 with respect to the first face 14 is an important feature of the present invention and is discussed more fully hereinbelow.

The second wall 20 is shown in Figure 1 as being substantially perpendicular to the first face 14 although it has been found that the second wall 20 may be inclined at an angle of as much as between plus or minus ten degrees with respect to a plane perpendicular to the first face 14.

In Figure 1, the anti-glare filter 10 is constructed such that the first wall 18 is inclined at an angle $\phi$ of thirty-nine degrees with respect to the first face 14. Light ray no. 1 is the most critical light ray which can enter the first wall 18. Light ray no. 1 is representative of ambient light coming from the ceiling area, where most of the distracting light originates, from the nearest overhead light source. Assuming the index of refraction of the material comprising the anti-glare filter 10 is 1.6, light ray no. 1 will, upon entering the second face 16, be refracted according to Snell's Law which provides:

$$n_1 * \sin \theta_i = n_2 * \sin \theta_r \quad eq~(1)$$

Where $n_1$ = the index of refraction of material no. 1,

$\theta_i$ = the angle of incidence,

$n_2$ = the index of refraction of material no. 2, and

$\theta_r$ = the angle of refraction.

For the above equation, $n_1$ equals 1 for a light ray travelling through air, $\theta_i$ equals ninety degrees, and $n_2$ equals 1.6. Solving equation (1) for the angle of refraction $\theta_r$ yields a value of thirty-nine degrees which is measured from a plane perpendicular to the first wall 18. Thus, light ray no. 1, upon entering the anti-glare filter 10, is refracted at an angle of thirty-nine degrees which results in ray no. 1 proceeding substantially horizontally along path 22 until striking the first face 14 substantially perpendicularly.

The light ray no. 1, upon striking the first face 14, is reflected back along the same path 22 previously traveled until it strikes the second face 16 at point A, where it originally entered the anti-glare filter 10. The angle at which the portion 22 of ray no. 1 strikes point A of first wall 18 is thirty-nine degrees. Solving equation (1) where $n_1$ now equals 1.6, $\theta_i$ equals thirty-nine degrees, and $n_2$ equals 1, the angle of refraction $\theta_r$ is calculated to be ninety degrees. This indicates that this portion 22 of ray no. 1 is the most critical ray which can escape from the filter 10. Any portion 22 of ray no. 1 striking point A at an angle greater than thirty-nine degrees will be internally reflected as shown in Figure 1.

It can demonstrated that after ray no. 1 is internally reflected at point A, it repeatedly strikes the first face 14 and second wall 18 at angles greater than thirty-nine degrees. Therefore, there will never be a refracted ray no. 1 from these surfaces. Ray no. 1 is thus said to be totally internally reflected such that no glare is caused by this light ray.

By solving equation (1) for various other angles of inclination $\phi$ of the first wall 18, it can be demonstrated that the critical angle for a given material must satisfy the following equation:

$$\sin~(critical~angle) = 1/index~of~refraction~of~material \quad eq(2)$$

If the angle of inclination $\phi$ of the first wall 18 is less than the critical angle, light ray no. 1 will not strike the first face 14 perpendicularly. Thereafter, reflected ray no. 1 will not strike the first wall 18 at an angle greater than or equal to the critical angle such that total internal reflection will not be achieved. Conversely, if the angle of inclination $\phi$ of the first wall 18 is greater than the critical angle, ray no. 1 will be reflected off the first face 14 and will strike the first wall 18 at an angle greater than the critical angle such that the reflected ray no. 1 will be totally internally reflected. Thus, it is necessary for proper operation of the present invention that the angle of inclination $\phi$ of the first wall 18 with respect to the first face 14 be at least substantially equal to the critical angle for the material of which the anti-glare filter 10 is constructed.

Listed below are the critical angles of various materials which may be used to construct the anti-glare filter 10 of the present invention.

| MATERIAL | CRITICAL ANGLE |
|---|---|
| polymethylacrylate | 42.53 |
| polyethylacrylate | 42.92 |
| polytutylacrylate | 43.01 |
| polyethoxyethylacrylate | 42.83 |
| poly (2 methoxyethyl) acrylate | 43.12 |
| poly (2 bromo sec. butyl) acrylate | 40.43 |
| poly (2 bromo phenyl) acrylate | 38.34 |
| poly (2 chloromethyl) acrylate | 41.23 |
| polyacrylontitrile | 41.47 |
| polymethylmethacrylate | 42.16 |
| polyethylmethacrylate | 42.33 |
| poly butyl methacrylate | 42.4 |
| poly (t-butyl) methacrylate | 43.09 |

| | |
|---|---|
| polycyclohexyl methacrylate | 41.59 |
| poly (2-hydroxyethyl) methacrylate | 41.41 |
| poly (2-phenoxyethyl) methacrylate | 39.96 |
| poly phenylmethacrylate | 34.82 |
| poly (o-chloro) styrene | 38.4 |
| poly (2.6 dichloro) styrene | 37.99 |
| poly (O-methoxy) styrene | 38.87 |
| polyacetal | 41.47 |
| poly (n-benzyl) methacrylamide | 38.78 |
| poly (N-butyl) methacrylamide | 41.36 |
| polyvinyl chloride | 40.53 |
| polyvinyl fluoride | 38.68 |
| polyvinylidene chloride | 38.68 |
| polyvinyl acetate | 42.97 |
| polyvinyl carbazole | 36.36 |
| polyvinyl isobutyl ether | 43.58 |
| polyvinyl alcohol | 41.81 |
| poly (n-vinyl) phthalimide | 38.13 |
| polyallyl phthalate | 41.21 |
| polyester-Styrene | 40.5 |
| poly (o-tolyl) methacrylate | 39.54 |
| poly carbonates (bisphenol) | 39.12 |
| poly (N-2, phenethy) methacrylamide) | 39.01 |
| polystyrene | 38.93 |

| | |
|---|---|
| zinc crown glass | 41.24 |
| higher dispersion crown glass | 41.14 |
| light flint glass | 39.41 |
| heavy flint glass | 37.31 |
| heaviest flint glass | 31.94 |

Returning now to Figure 1, light ray no. 1, upon striking the first face 14, is partially reflected back upon itself as discussed above while a portion 24 of the light ray no. 1 passes through the first face 14. The portion 24 of light ray no. 1 passing through the first face 14 impinges upon the face of the CRT 12 at point B. Because the portion 24 of ray no. 1 strikes the CRT 12 perpendicularly, it is reflected back upon itself, through first face 14, and back to point A where it strikes the first wall 18 at the critical angle of thirty-nine degrees. Thus, not only is the portion 22 of light ray no. 1 which is reflected from the first face 14 totally internally reflected, but the portion 24 of ray no. 1 is also totally internally reflected after is is reflected from the CRT 12.

In practice, however, most CRT's are somewhat curved about a horizontal axis as shown in Figure 1. Thus, the farther from point B light rays are when they impinge upon the CRT, the greater the reflected angle. Consider light ray no. 2 which enters the second face 16 at point C and is reflected at an angle of thirty-nine degrees such that it travels substantially parallel to the portion 22 of ray no. 1. When ray no. 2 strikes the first face 14, a portion (not shown) of the ray is reflected back upon itself and internally reflected just as in the case of ray no. 1. A portion 26 of ray no. 2 also passes through the first face 14 and strikes the CRT at point D. Because point D is displaced thirteen degrees from point B, a portion 28 of ray no. 2 is reflected at an angle of twenty-six degrees from the face of the CRT with respect to the portion 26 of ray no. 2. When the portion 28 of ray no. 2 strikes the first face 14, it is refracted according to Snell's Law at an angle of sixteen degrees. Proceeding at such an angle, ray no. 2 will strike the first wall 18 at an angle greater than the critical angle such that ray no. 2 will be totally internally reflected.

Because the radius of curvature increases as you move farther and farther from point B, the angle of the light rays reflected off the surface of CRT above point B becomes greater and greater such that all such light rays will be totally internally reflected.

The situation is different with respect to the bottom half of the CRT 12. Light ray no. 3 enters the first face 16 at point E and travels substantially horizontally until the light ray no. 3 strikes the first face 14 of the anti-glare filter 10. A portion of the ray no. 3 will be reflected back upon itself (not shown) and a portion 30 of ray no. 3 will pass through the first face 14. The portion of the ray 30 passing through the first face 14 will be reflected off the CRT 12 at an angle of twenty-six degrees. This reflected portion 32 of the ray no. 3 will strike the first face 14 and be refracted at an angle of sixteen degrees. This refracted ray will strike the first wall 18 at an angle less than the critical angle and will therefore pass through the anti-glare filter and be visible by the user.

This situation can be cured by increasing the angle of inclination $\phi$ of the first wall 18 above the critical angle for the material or, alternatively, maintaining the angle while changing the material to a material having a higher index of refraction. If the difference between the angle of slope of the CRT 12 and the vertical at the point F is "a", then the increase ($\Delta$) in the angle of inclination $\phi$ of the first wall 18 above the critical angle of the material is provided by the following equation:

$$( \Delta ) = (a/\text{index of refraction of the material}) \quad \text{eq.(3)}$$

For the illustrated case, "a" equals thirteen degrees and the index of refraction of the material equals 1.6. Solving the equation yields a value for $\Delta$ of 8.08°. If the angle of inclination $\phi$ of the first wall 18 is increased by 8.08° as shown by the dotted line in Figure 1, then ray no. 3' enters the second face 16 at point G. Ray no. 3' passes through the first face 14 and strikes the face of the CRT 12 perpendicularly such that ray no. 3' is reflected back upon itself. Upon passing back through the first face 14, ray no. 3' strikes the first wall 18 at an angle which is equal to the critical angle such that ray no. 3 is totally internally reflected.

Thus, another feature of the present invention is an anti-glare filter wherein the angle of inclination $\phi$ of the first wall 18 is chosen to be above the critical angle with respect to the first face 14 such that ambient light entering the second face 16, passing through the first face 14, reflecting off the CRT 12, and passing back through the first face 14, is totally internally reflected.

6

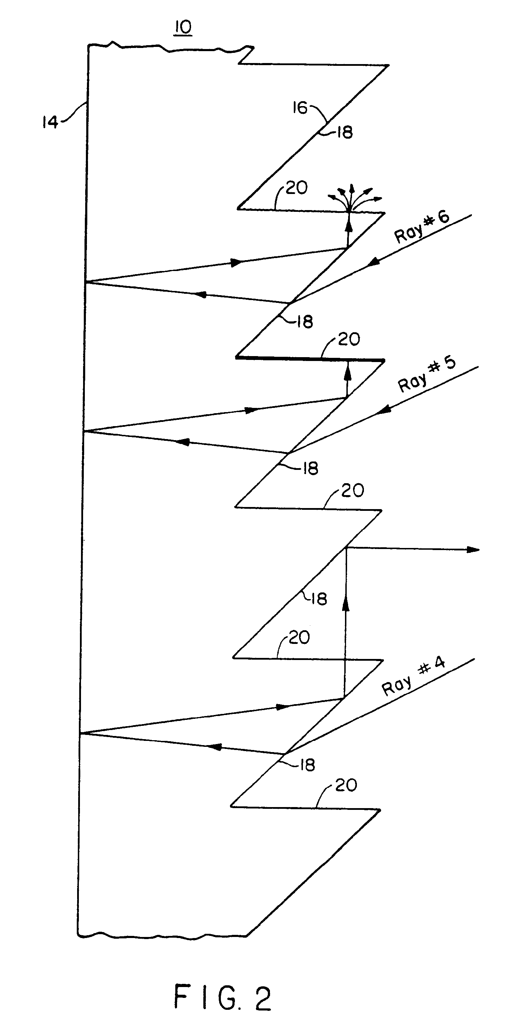

As shown in Figure 2, ambient light that has entered the anti-glare filter 10 and has been entrapped therein due to total internal reflection, can nonetheless still cause a distraction as illustrated by ray no. 4. Ray no. 4 enters the anti-glare filter 10 through first wall 18, is reflected off the first face 14, and is then reflected off the first wall 18 so as to strike second wall 20. Ray no. 4 strikes the second wall 20 perpendicularly such that the ray passes through the second wall 20 and out of the anti-glare filter 10. Ray no. 4 follows the path shown in Figure 2 and is partially reflected back to the observer's eye causing the CRT 12 to have an over-all frosted appearance.

There are three ways to compensate for the light rays which escape from the anti-glare filter 10. First, the second wall 20 may be covered with an opaque material which will absorb light. This is illustrated in conjunction with ray no. 5 which follows a path similar to ray no. 4 but is absorbed by the second wall 20 such that no reflected light reaches the observer. A second approach is to provide the second wall 20 with a roughened surface. This is shown in conjunction with ray no. 6. Ray no. 6 follows a path similar to ray no. 4 but, upon striking second wall 20, is refracted in numerous directions by the roughened surface such that a miniscule portion of the light ray may be reflected back to the observer. A third approach is to provide a slight tint in the anti-glare filter 10 which will cut down on the light rays reflected back to the observer as well as increasing the contrast of the intelligence displayed on the CRT.

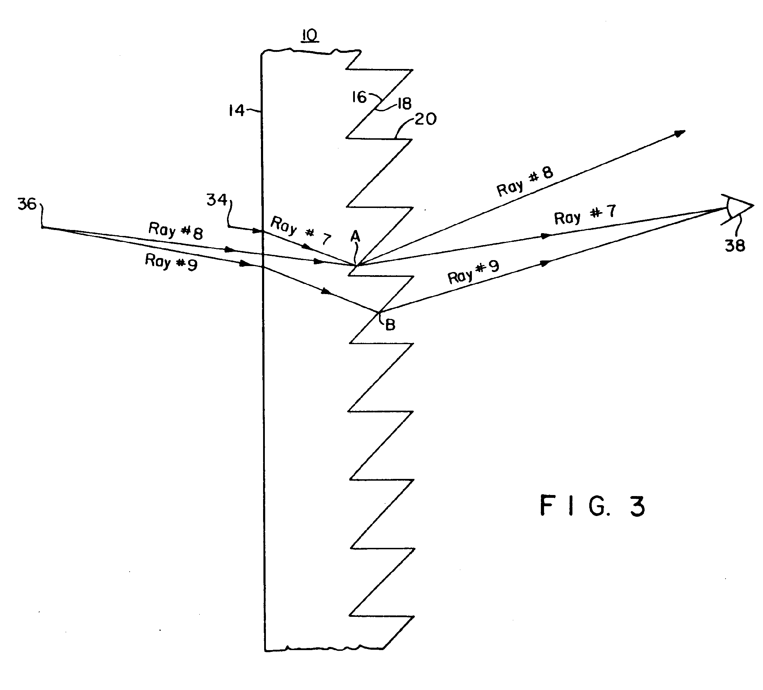

Another factor which must be considered in designing an anti-glare filter is the fact that in the case of a CRT, where the face of the CRT is curved either spherically or cylindrically, the anti-glare filter must also be curved to be substantially parallel to the curvature of the CRT in the horizontal plane. That is, the anti-glare filter 10 must be curved or bent around its vertical axis. Unless this is done, the rows or lines of text appearing on the face of the CRT will appear to be arched. This phenomena is explained in conjunction with Figure 3.

In Figure 3, light source 34 is closer to the anti-glare filter 10 than light source 36. Light ray no. 7 follows the illustrated path and emerges from the second face 16 of the anti-glare filter 10 at point A. Light ray No. 7 then travels from point A to an observer's eye 38. If light ray no. 8 from the second light source 36 were to appear at the same vertical height as that of light ray no. 7 from the first light source 34, it too would have to emerge at point A. However, as shown in Figure 3, ray no. 8 follows a path which passes the eye 38 of the observer well above eye-level and is not seen. The ray which the eye 38 of the observer does see is illustrated by ray no. 9 which emerges at point B, well below point A.

Thus, it is apparent that the farther a point is from the anti-glare filter 10, the lower it appears to be to an observer. In the case of a CRT, along any horizontal line, a point at the extreme right or left of the CRT is farther from a flat anti-glare filter 10 than a point at the center and appears to come from a point lower than does a point at the center. This causes a straight line on the CRT to be arched when viewed through a flat filter. Thus, bending the filter such that it is substantially parallel to the face of the CRT is necessary to overcome this phenomena.

A typical anti-glare filter 10 constructed according to the teachings of the present invention is, for example, constructed of a modified acrylic known in the trade as DR having a thickness of 1.016mm (forty mils) and an index of refraction of 1.49. The filter is approximately 25.4cm (ten inches) by 25.4cm (ten inches) with eighty horizontal V-shaped grooves per 2.54cm (inch). Each groove is comprised of a horizontal wall 20 extending approximately 0.3175mm (twelve and one-half mils) into the material and an inclined wall 18 having a slope of forty-five degrees with respect to the first face 14. The filter 10 is then placed an arbitrary distance from the viewing screen, with the distance being chosen to achieve the best overall viewing results.

The anti-glare filter 10 disclosed herein is particularly advantageous when used in conjunction with a liquid crystal display (LCD). Because LCD's depend on reflected ambient light for visibility and the liquid crystal is enclosed between two layers of glass, the surfaces of which are notorious glare producers, the anti-glare filter 10 of the present invention is extremely well-suited for LCD's. If a filter, such as a circularly polarized medium, is placed in front of a LCD to cut out surface glare, it also cuts out much of the ambient light on which the LCD depends for visibility and the display becomes unreadable. However, some filtering is needed since in many situations there is so much ambient light coming from so many different directions that the display is all but useless. The anti-glare filter 10 of the present invention does not depend on tint or polarization and therefore allows all the ambient light to enter. At the same time, however, the anti-glare filter 10 does completely cancel all specular glare from the glass surfaces. Also, since most LCD's are flat, there is no curvature complication to contend with as in the case of CRT's. Therefore, it is very advantageous to use the present invention in conjunction with LCD's.

It will be understood that the embodiment described herein is merely exemplary and that a person of ordinary skill in the art may make many variations and modifications without departing from the scope of the invention. All such modifications and variations are intended to be included within the scope of the invention as defined in the appended claims.

## Claims

1. A viewing screen assembly comprising a viewing screen for displaying information and an optical filter (10) positioned in front of the viewing screen with air therebetween; wherein
said filter is a sheet of a substantially transparent material, with a first smooth face (14) facing the viewing screen and an opposite second face (16) on the side of a viewer;
said second face (16) has a plurality of V-shaped parallel grooves forming, as seen in cross-section, a saw-tooth shaped body between each two adjacent grooves;
said saw-tooth shaped bodies are non-symetrical, with one of the surfaces (20) of each of the saw-tooth shaped bodies arranged in the range of plus or minus 10 degrees ( ± 10°) from a perpendicular to said first face; and
the other of the surfaces of each of said saw-tooth shaped bodies (18) is inclined at an angle at or above the critical angle of said material, when measured from a notional line parallel to said first face (14);
such that ambient light passing through said filter, reflected off said viewing screen and entering into the filter again, is internally reflected at said second face (16).

2. A filter according to claim 1, wherein said viewing screen (12) is a transmission screen.

3. A filter according to claim 1, wherein said viewing screen (12) is a liquid crystal display.

4. A filter according to any preceding claim, wherein said first and second faces (14,16) are curved to follow the contours of the viewing screen (12).

5. A filter according to any preceding claim, wherein the other of said walls (20) has a rough surface.

6. A filter according to any preceding claim, wherein at least a portion of said other of said walls (20) is covered with an opaque material.

7. A filter according to claim 1, wherein said material has an index of refraction of substantially 1.6.

8. A filter according to claim 1, wherein said angle is substantially 45°.

9. A method of filtering glare caused by ambient light, reflected from a viewing screen for displaying information, comprising the step of
positioning an optical filter (10) in front of the viewing screen with air therebetween; wherein
said filter is a sheet of a substantially transparent material, with a first smooth face (14) facing the viewing screen and an opposite second face (16) on the side of a viewer;
said second face (16) has a plurality of V-shaped parallel grooves forming, as seen in cross-section, a saw-tooth shaped body between each two adjacent grooves;
said saw-tooth shaped bodies are non-symetrical, where one of the surfaces (20) of each of the saw-tooth shaped bodies is arranged in the range of plus or minus 10 degrees ( ± 10°) from a perpendicular to said first face; and
the other of said surfaces of each of said saw-tooth shaped bodies (18) is inclined at an angle at or above the critical angle of said material, when measured from a notional line parallel to said first face (14);
such that ambient light passing through said filter, reflected off said viewing screen and entering into the filter again, is internally reflected at said second face (16).

10. A method according to claim 9, wherein said viewing screen (12) is a liquid crystal display.

## Patentansprüche

1. Bildschirmeinheit mit einem Bildschirm zur Informationsanzeige und einem vor dem Bildschirm, mit Luft dazwischen angeordneten optischen Filter (10); wobei
der Filter eine Schicht aus im wesentlichen durchsichtigem Material ist, mit einer ersten glatten, zum Bildschirm gerichteten Seite (14) und einer gegenüberliegenden zweiten Seite (16) auf der Betrachterseite;
die zweite Seite (16) eine Anzahl V-förmiger, paralleler Vertiefungen hat, die, im Querschnitt betrachtet, einen sägzahnförmigen Körper zwischen je zwei benachbarten Vertiefungen bilden;

die sägezahnförmigen Körper nicht-symmetrisch sind, wobei eine der Oberflächen (20) eines jeden sägezahnförmigen Körpers in dem Bereich von plus oder minus 10 Grad (± 10°) zu einer Senkrechten zur ersten Seite angeordnet sind; und die andere der Oberflächen eines jeden sägezahnförmigen Körpers (18) um einen Winkel entsprechend oder oberhalb des kritischen Winkels des Material - gemessen von einer fiktiven Linie parallel zur ersten Seite (14) - geneigt ist;

so daß durch den Filter einfallendes, von dem Bildschirm reflektiertes und erneut in den Filter einfallendes Umgebungslicht intern an der zweiten Seite (16) reflektiert wird.

2. Filter nach Anspruch 1,
wobei der Bildschirm (12) ein Übertragungsschirm ist.

3. Filter nach Anspruch 1,
wobei der Bildschirm (12) eine Flüssigkristallanzeige ist.

4. Filter nach einem der vorhergehenden Ansprüche,
wobei die erste und zweite Seite (14, 16) gebogen sind, um der Kontur des Bildschirms (12) zu folgen.

5. Filter nach einem der vorhergehenden Ansprüche,
wobei die andere der Wände (20) eine rauhe Oberfläche hat.

6. Filter nach einem der vorhergehenden Ansprüche,
wobei zumindest ein Teil der anderen Wände (20) mit einem matten Material bedeckt ist.

7. Filter nach Anspruch 1,
wobei das Material einen Brechungsindex von etwa 1,6 hat.

8. Filter nach Anspruch 1,
wobei der Winkel etwa 45° beträgt.

9. Verfahren zum Filtern von durch Umgebungslicht verursachtem und von einem Informationsanzeige-Bildschirm reflektiertem Blendlicht, mit den Schritten:
Anordnung eines optischen Filters (10) vor dem Bildschirm mit Luft dazwischen; wobei
der Filter eine Schicht aus einem im wesentlichen transparenten Material mit einer glatten, dem Bildschirm zugewandten Seite (14) und einer gegenüberliegenden zweiten Seite (16) auf der Benutzerseite ist;
die zweite Seite (16) eine Anzahl von V-förmigen parallelen Vertiefungen hat, die im Querschnitt gesehen einen sägezahnförmigen Körper zwischen je zwei benachbarten Vertiefungen bilden;
die sägezahnförmigen Körper nicht-symmetrisch sind, wobei eine der Oberflächen (20) eines jeden sägezahnförmigen Körpers im Bereich von plus oder minus 10 Grad (± 10°) zu einer Senkrechten zur ersten Seite angeordnet ist; und
die andere der Oberflächen von jedem der sägezahnförmigen Körper (18) in einem Winkel bei oder oberhalb des kritischen Winkels des Materials - gemessen von einer fiktiven Linie parallel zur ersten Seite (14) - geneigt ist;
so daß durch den Filter einfallendes, von dem Bildschirm reflektiertes und erneut in den Filter einfallendes Umgebungslicht intern an der zweiten Seite (16) reflektiert wird.

10. Verfahren nach Anspruch 9,
wobei der Bildschirm (12) eine Flüssigkristallanzeige ist.

## Revendications

1. Ensemble de visualisation comprenant un écran de visualisation pour l'affichage d'informations et un filtre optique (10) positionné devant l'écran de visualisation, de l'air étant présent entre le filtre et l'écran; dans lequel:
   - ledit filtre est une feuille d'un matériau sensiblement transparent présentant une première face lisse (14) faisant face à l'écran de visualisation, et une deuxième face opposée (16) du côté d'une personne qui regarde l'écran;
   - ladite deuxième face (16) présente une pluralité de rainures parallèles en forme de V constituant, en section transversale, un corps en forme de dents de scie entre chaque paire de rainures adjacentes;

- lesdits corps en forme de dents de scie sont dissymétriques, l'une (20) des surfaces de chacun des corps en forme de dents de scie étant décalée, d'un angle compris dans la plage de plus ou moins (± 10°C) par rapport à une ligne orthogonale à ladite première face; et
- l'autre (18) des surfaces de chacun desdits corps en forme de dents de scie est inclinée à un angle égal ou supérieur à l'angle critique pour ledit matériau, par rapport à une ligne imaginaire parallèle à ladite première face (14),

de sorte que la lumière ambiante qui traverse ledit filtre et qui est réfléchie par ledit écran de visualisation et qui entre de nouveau dans le filtre, subisse une réflexion interne sur ladite deuxième face (16).

2. Un filtre selon la revendication 1, dans lequel ledit écran de visualisation (12) est un écran transmettant la lumière.

3. Un filtre selon la revendication 1, dans lequel ledit écran de visualisation (12) est un dispositif d'affichage à cristaux liquides.

4. Un filtre selon l'une quelconque des revendications précédentes, dans lequel ladite première et ladite seconde faces (14, 16) sont incurvées afin de suivre le contour de l'écran de visualisation (12).

5. Un filtre selon l'une quelconque des revendications précédentes, dans lequel l'autre desdites parois (20) présente une surface rugueuse.

6. Un filtre selon l'une quelconque des revendications précédentes, dans lequel au moins une partie de l'autre desdites parois (20) est recouverte d'un matériau opaque.

7. Un filtre selon la revendication 1, dans lequel ledit matériau présente un indice de réfraction sensiblement égal à 1,6.

8. Un filtre selon la revendication 1, dans lequel ledit angle est sensiblement de 45°.

9. Un procédé de filtrage des reflets provoqués par la lumière ambiante réfléchie par un écran de visualisation pour l'affichage d'informations, comprenant l'étape consistant à:
   - positionner un filtre optique (10) devant l'écran de visualisation avec interpositionnement d'air entre le filtre et l'écran; dans lequel
   - ledit filtre est une feuille d'un matériau sensiblement transparent présentant une première face lisse (14) faisant face à l'écran de visualisation, et une deuxième face opposée (16) du côté d'une personne qui regarde l'écran;
   - ladite deuxième face (16) présentant une pluralité de rainures parallèles en forme de V constituant, en section transversale, un corps en forme de dents de scie entre chaque paire de rainures adjacentes;
   - lesdits corps en forme de dents de scie sont dissymétriques, l'une (20) des surfaces de chacun des corps en forme de dents de scie étant décalée, d'un angle compris dans la plage de plus ou moins (± 10°C) par rapport à une ligne orthogonale à ladite première face; et
   - l'autre (18) des surfaces de chacun desdits corps en forme de dents de scie est inclinée à un angle égal ou supérieur à l'angle critique pour ledit matériau, par rapport à une ligne imaginaire parallèle à ladite première face (14),

   de sorte que la lumière ambiante qui traverse ledit filtre et qui est réfléchie par ledit écran de visualisation et qui entre de nouveau dans le filtre, subisse une réflexion interne sur ladite deuxième face (16).

10. Un procédé selon la revendication 9, dans lequel ledit écran de visualisation (12) est un dispositif d'affichage à cristaux liquides.

F I G. I

FIG. 2

F I G. 3

EP 0 304 517 B1